# EUROPEAN PATENT APPLICATION

(11) **EP 4 764 922 A1**
(43) Date of publication of application: **24.06.2026**
(21) Application number: 25219857.7
(22) Date of filing: 01.12.2025
(51) Int. Cl.: G06F 21/57, G06N 20/00, G06F 21/51, G06F 21/56, G06F 8/60, G06N 20/10

(54) **PREEMPTIVE SECURITY SCANS OF SOFTWARE PACKAGES**

(30) Priority: 19.12.2024 US 202418988088
(71) Applicant: Capital One Services, LLC, McLean, Virginia 22102 (US)
(72) Inventor: SIVAKOLUNDHU, Rekha, McLean, VA 22102 (US); CHATELAIN, Wayne, McLean, VA 22102 (US); RAVI, Gayathri Swaminath, McLean, VA 22102 (US); GARIMELLA, Vijay Kumar, McLean, VA 22102 (US); KONDO, Dean, McLean, VA 22102 (US)
(74) Representative: Boult Wade Tennant LLP

(57) **Abstract**

In some implementations, a remote scanning system may receive, from a developer system, a request for a software package from a package repository. The remote scanning system may provide at least a portion of the software package to a machine learning model in order to receive a security indicator associated with the software package. The remote scanning system may generate a message based on the security indicator. The remote scanning system may transmit, to the developer system and in response to the request, the message. The remote scanning system may receive, from the developer system, a confirmation that the software package is requested. The remote scanning system may forward the software package from the package repository and to the developer system.

## Description

### BACKGROUND

A package repository may store software packages from multiple developers for other developers to download and use. For example, one developer in an organization may upload a software package to the package repository, and another developer in the same organization may download the software package to use. However, using an unsecure software package from the package repository may introduce vulnerabilities into software applications that use the unsecure software package.

### SUMMARY

Some implementations described herein relate to a system for preemptively scanning a software package. The system may include one or more memories and one or more processors communicatively coupled to the one or more memories. The one or more processors may be configured to receive, from a developer system, a request for the software package from a package repository. The one or more processors may be configured to provide at least a portion of the software package to a machine learning model in order to receive a security indicator associated with the software package, wherein the machine learning model is trained using at least one custom requirement associated with the developer system. The one or more processors may be configured to determine whether to block the software package based on the security indicator. The one or more processors may be configured to transmit, to the developer system and in response to the request, an indication of whether the software package is unsafe.

Some implementations described herein relate to a method of preemptively scanning a software package. The method may include receiving, from a developer system and at a remote scanning system, a request for the software package from a package repository. The method may include providing at least a portion of the software package to a machine learning model in order to receive a security indicator associated with the software package. The method may include generating, by the remote scanning system, a message based on the security indicator. The method may include transmitting, to the developer system and in response to the request, the message. The method may include receiving, from the developer system and at the remote scanning system, a confirmation that the software package is requested. The method may include forwarding, by the remote scanning system, the software package from the package repository and to the developer system.

Some implementations described herein relate to a non-transitory computer-readable medium that stores a set of instructions for preemptively scanning a set of software code. The set of instructions, when executed by one or more processors of a device, may cause the device to receive, from a developer system, a request to push the set of software code to a code repository or a production environment. The set of instructions, when executed by one or more processors of the device, may cause the device to provide the set of software code to a machine learning model in order to receive a security indicator associated with the set of software code, wherein the machine learning model is trained using at least one custom requirement associated with the developer system. The set of instructions, when executed by one or more processors of the device, may cause the device to determine to reject the set of software code based on the security indicator. The set of instructions, when executed by one or more processors of the device, may cause the device to transmit, to the developer system and in response to the request, an indication that the set of software code is rejected.

### BRIEF DESCRIPTION OF THE DRAWINGS

Figs. 1A-1D are diagrams of an example implementation relating to automatic blocking of unsecure software packages, in accordance with some embodiments of the present disclosure.
Figs. 2A-2B are diagrams of an example implementation relating to messages regarding unsecure software packages, in accordance with some embodiments of the present disclosure.
Figs. 3A-3D are diagrams of an example implementation relating to preemptive scans of software packages, in accordance with some embodiments of the present disclosure.
Fig. 4 is a diagram of an example environment in which systems and/or methods described herein may be implemented, in accordance with some embodiments of the present disclosure.
Fig. 5 is a diagram of example components of one or more devices of Fig. 4, in accordance with some embodiments of the present disclosure.
Fig. 6 is a flowchart of an example process relating to preemptive security scans of software packages, in accordance with some embodiments of the present disclosure.
Fig. 7 is a flowchart of an example process relating to preemptive security scans of software code, in accordance with some embodiments of the present disclosure.

### DETAILED DESCRIPTION

The following detailed description of example implementations refers to the accompanying drawings. The same reference numbers in different drawings may identify the same or similar elements.

A package repository may store software packages from multiple developers for other developers to download and use. For example, an organization may establish a package repository for developers within the organization to share software packages. The software repository may make development of software applications faster.

However, the software repository may host unsecure software packages. For example, a developer may upload a software package that is inadequately debugged or tested for security vulnerabilities. In another example, a software package may become out-of-date because the developer who uploaded the software package stops contributing to the software package. As a result, using the software repository may increase chances of security vulnerabilities and bugs in software applications.

Some implementations described herein enable a package repository to automatically scan software packages for security vulnerabilities. Therefore, the package repository may block unsecure software packages from being uploaded and/or downloaded or may at least warn a developer before the developer downloads an unsecure software package. As a result, chances of a software application (developed using one or more software packages from the package repository) having a security vulnerability are decreased, which improves security. Additionally, chances of the software application having bugs are decreased, which conserves computing resources that otherwise would have been spent on debugging and fixing the software application.

Additionally, or alternatively, some implementations described herein enable a code repository to automatically scan software code before the software code is uploaded to the code repository or pushed to a production environment. Therefore, the code repository may block unsecure software code from being uploaded and/or deployed or may at least warn a developer before the developer uploads and/or deploys unsecure software code. As a result, chances of a software application (compiled from the software code) having a security vulnerability are decreased, which improves security. Additionally, chances of the software application having bugs are decreased, which conserves computing resources that otherwise would have been spent on compiling and deploying a patch for the software application.

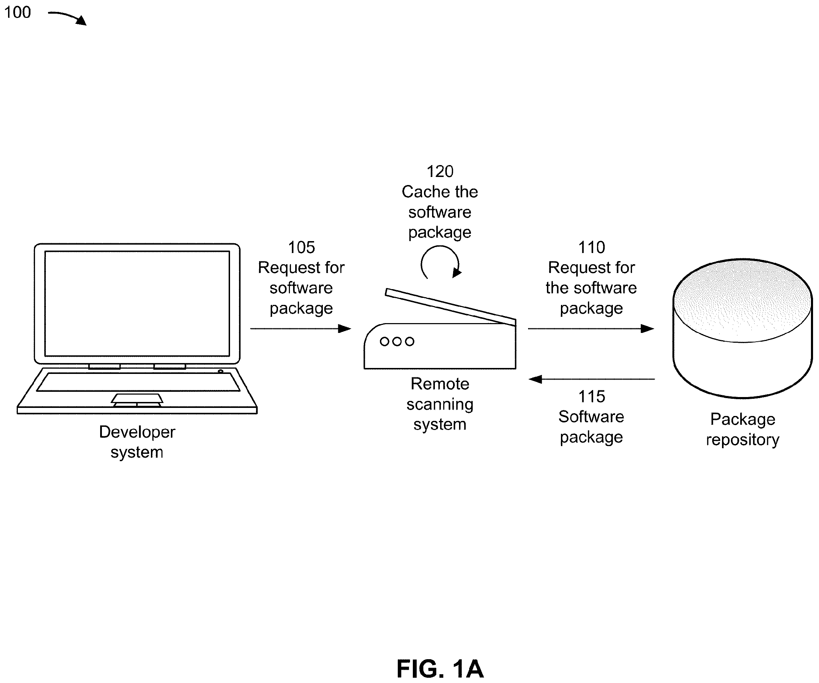

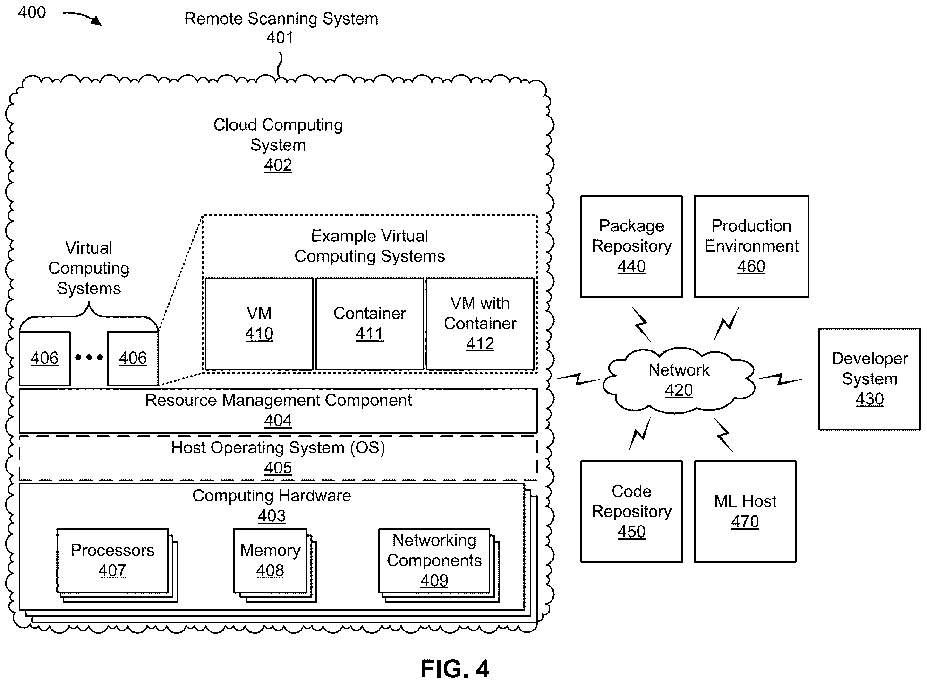

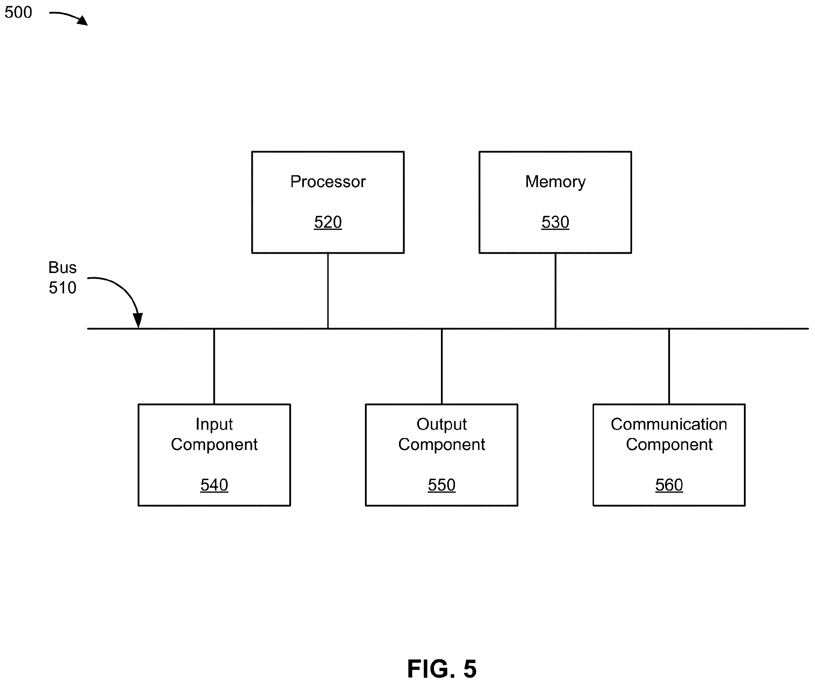

Figs. 1A-1D are diagrams of an example 100 associated with automatic blocking of unsecure software packages. As shown in Figs. 1A-1D, example 100 includes a developer system, a remote scanning system, a package repository, and a machine learning (ML) model (e.g., provided by an ML host). These devices are described in more detail in connection with Figs. 4 and 5.

As shown in Fig. 1A, the developer system may transmit, and the package repository may receive, a request for a software package. The request may be a request to download the software package. The request may include a hypertext transfer protocol (HTTP) request, a file transfer protocol (FTP) request, and/or an application programming interface (API) call. The request may include (e.g., in a header and/or as an argument) an indication of the software package. For example, the indication may include a name, a filepath, an index, and/or another type of alphanumeric identifier associated with the software package.

In one example, a user of the developer system may provide input (e.g., via an input component of the developer system) that triggers the developer system to transmit the request. In some implementations, the user may interact with a user interface (UI) in order to provide the input. For example, a web browser (or another type of application) executed by the developer system may navigate to a website controlled by (or at least associated with) the package repository; therefore, the developer system may output (e.g., via an output component of the developer system) the UI in order to represent the website. Alternatively, the user may provide text input (e.g., via a command line or a shell, among other examples) that triggers the developer system to transmit the request.

As further shown in Fig. 1A, the remote scanning system may function as a proxy for the package repository. For example, as shown by reference number 105, the developer system may transmit, and the remote scanning system may receive (on behalf of the package repository), the request for the software package. Accordingly, the remote scanning system may forward (e.g., directly or by decoding the request from the developer system and re-encoding information from the request into a new message for the package repository) the request to the package repository, as shown by reference number 110.

In some implementations, as shown by reference number 115, the package repository may transmit, and the remote scanning system may receive, the software package. For example, the package repository may transmit, and the remote scanning system may receive, the software package in response to the request (from the developer system). The software package may include one or more files (e.g., a file including software code for the software package and/or a library file including machine-executable instructions for the software package). The remote scanning system may cache the software package, as shown by reference number 120. For example, the remote scanning system may store the software package in a cache controlled by the remote scanning system (whether local to the remote scanning system or remote therefrom).

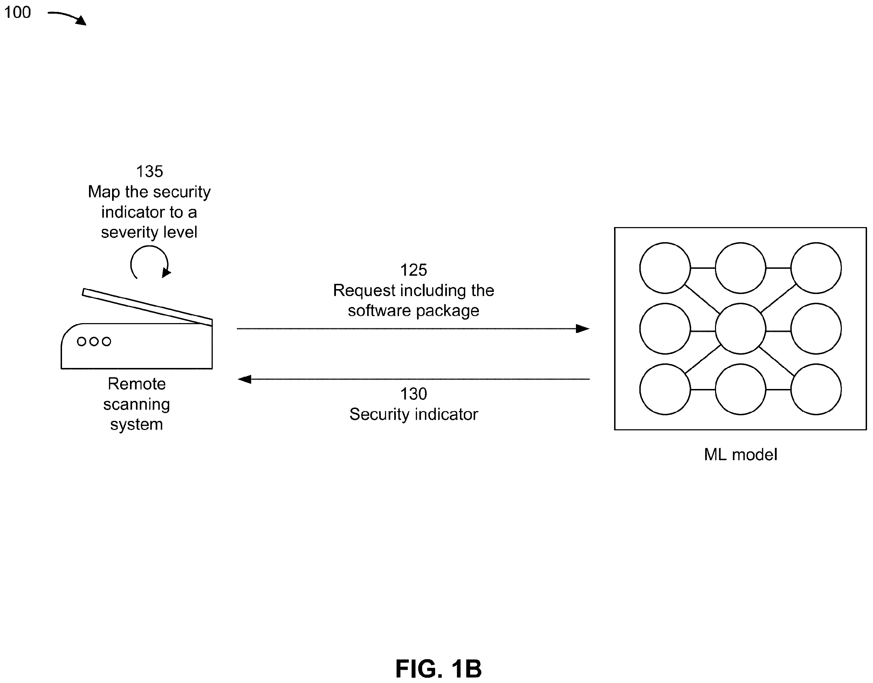

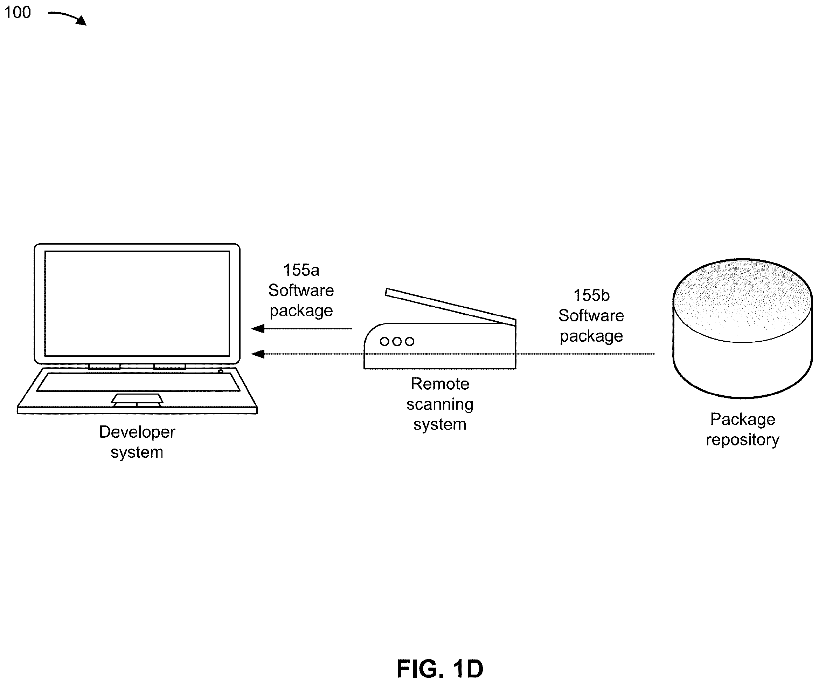

Although Fig. 1A depicts the remote scanning system caching the software package (prior to scanning the software package, as described in connection with Fig. 1B), other examples may include the package repository waiting to transmit the software package until after the remote scanning system finishes. For example, the remote scanning system may be at least partially integrated (e.g., physically, virtually, and/or logically) with the package repository, such that the remote scanning system may forward the software package directly (e.g., as described in connection with Fig. 1D) without caching the software package.

As shown in Fig. 1B, the remote scanning system may preemptively scan the software package (that was requested by the developer system). In some implementations, the remote scanning system may provide (at least a portion of) the software package to the ML model in order to scan the software package. For example, as shown by reference number 125, the remote scanning system may transmit a request including the software package to the ML model (e.g., to the ML host providing the ML model). The request may include an HTTP request, an FTP request, and/or an API call.

In some implementations, the ML model may include a regression algorithm (e.g., linear regression or logistic regression), which may include a regularized regression algorithm (e.g., Lasso regression, Ridge regression, or Elastic-Net regression). Additionally, or alternatively, the ML model may include a decision tree algorithm, which may include a tree ensemble algorithm (e.g., generated using bagging and/or boosting), a random forest algorithm, or a boosted trees algorithm. A model parameter may include an attribute of a model that is learned from data input into the model (e.g., information about front-end devices). For example, for a regression algorithm, a model parameter may include a regression coefficient (e.g., a weight). For a decision tree algorithm, a model parameter may include a decision tree split location, as an example.

Additionally, the ML host (and/or a device at least partially separate from the ML host) may use one or more hyperparameter sets to tune the ML model. A hyperparameter may include a structural parameter that controls execution of a machine learning algorithm by the ML host, such as a constraint applied to the machine learning algorithm. Unlike a model parameter, a hyperparameter is not learned from data input into the model. An example hyperparameter for a regularized regression algorithm includes a strength (e.g., a weight) of a penalty applied to a regression coefficient to mitigate overfitting of the model. The penalty may be applied based on a size of a coefficient value (e.g., for Lasso regression, such as to penalize large coefficient values), may be applied based on a squared size of a coefficient value (e.g., for Ridge regression, such as to penalize large squared coefficient values), may be applied based on a ratio of the size and the squared size (e.g., for Elastic-Net regression), and/or may be applied by setting one or more feature values to zero (e.g., for automatic feature selection). Example hyperparameters for a decision tree algorithm include a tree ensemble technique to be applied (e.g., bagging, boosting, a random forest algorithm, and/or a boosted trees algorithm), a number of features to evaluate, a number of observations to use, a maximum depth of each decision tree (e.g., a number of branches permitted for the decision tree), or a number of decision trees to include in a random forest algorithm.

Other examples may use different types of models, such as a Bayesian estimation algorithm, a k-nearest neighbor algorithm, an *a priori* algorithm, a k-means algorithm, a support vector machine algorithm, a neural network algorithm (e.g., a convolutional neural network algorithm), and/or a deep learning algorithm.

In some implementations, the ML model is trained using at least one custom requirement associated with the developer system. For example, different customers may have different requirements for software, and therefore the ML model may be customized to a particular customer. Therefore, the ML model may be trained to identify security risks based on a custom list of security requirements and not merely a generic list of good security practices. As a result, the ML model may be more accurate as compared with, for example, a generic antivirus scanner.

In some implementations, the remote scanning system may provide the portion of the software package to the ML model without storing the software package at the developer system. As a result, memory is conserved at the developer system. Additionally, the developer system may be prevented from using the software package when the software package is unsafe (e.g., because the remote scanning system may block the software package before the software package is ever stored on the developer system and thus available to be used).

As shown by reference number 130, the ML model may output a security indicator associated with the software package. For example, the ML model may transmit (e.g., from the ML host providing the ML model), and the remote scanning system may receive, the security indicator associated with the software package. The security indicator may be quantitative (e.g., a score indicating how secure, or unsecure, the software package is) and/or qualitative (e.g., a category of security risk and/or a list of security vulnerabilities predicted to be caused by the software package, among other examples).

Although the example 100 is described in connection with the ML host (and thus the ML model) being separate from the remote scanning system, other examples may include the ML host (and thus the ML model) as at least partially integrated (e.g., physically, logically, and/or virtually) with the remote scanning system. Therefore, the remote scanning system may apply the ML model directly to the software package rather than transmitting the software package to the ML host.

As shown by reference number 135, the remote scanning system may map the security indicator to a severity level. For example, the remote scanning system may use a table, a formula, or another type of data structure that stores possible security indicators in association with possible severity levels. In another example, the security indicator may be included in a data structure that also encodes the severity level (e.g., the ML model may determine the severity level as well as other information included in the security indicator). The severity level may be qualitative (e.g., a score indicating how secure, or unsecure, the software package is) and/or qualitative (e.g., a letter grade representing how secure, or unsecure, the software package is).

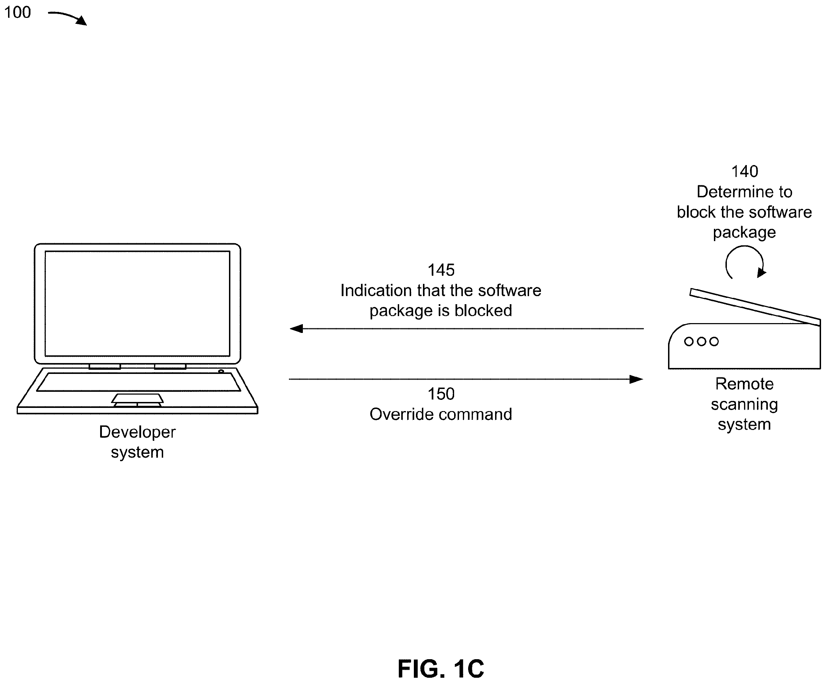

As shown in Fig. 1C and by reference number 140, the remote scanning system may determine to block the software package. For example, the remote scanning system may determine to block the software package based on the security indicator and/or the severity level. In one example, the remote scanning system may determine to block the software package based on the security indicator satisfying a condition (e.g., including a particular security vulnerability in a list) or a threshold (e.g., a score in the security indicator satisfying the threshold). Additionally, or alternatively, the remote scanning system may determine to block the software package based on the severity level satisfying the threshold.

As shown by reference number 145, the remote scanning system may transmit, and the developer system may receive, an indication that the software package is blocked. For example, the remote scanning system may transmit, and the developer system may receive, an indication of whether the software package is unsafe. The indication may be associated with the security indicator and/or the severity level (e.g., transmitted based on the security indicator and/or the severity level). In some implementations, the indication may further include a name of a security vulnerability determined using the security indicator. For example, the remote scanning system may use a table, a formula, or another type of data structure that stores security vulnerability names in association with possible security indicators. In another example, the name of the security vulnerability may be included in a data structure that also encodes the security indicator (e.g., the ML model may determine the name of the security vulnerability as well as other information included in the security indicator).

By automatically blocking the software package, the remote scanning system may improves security of a software application in which the user was going to use the software package. Additionally, the remote scanning system may reduce bugs in the software application (that would have been caused by the software package), which conserves computing resources that otherwise would have been spent on compiling and deploying a patch for the software application.

The indication may be included in an email message, a text message, a push notification, and/or instructions for a UI, among other examples. The developer system may output (e.g., using an output component of the developer system) the indication to the user. In some implementations, the user may be allowed to override the remote scanning system. Accordingly, as shown by reference number 150, the developer system may transmit, and the remote scanning system may receive, an override command. The developer system may transmit, and the remote scanning system may receive, the override command in response to the indication. The override command may be based on an interaction with the indication. For example, the user of the developer system may interact with the indication to trigger the developer system to transmit the override command.

In response to the override command, the remote scanning system may forward the software package to the developer system (from the package repository). In some implementations, as shown in Fig. ID and by reference number 155a, the remote scanning system may transmit the software package from the cache (e.g., as described in connection with Fig. 1A) to the developer system. Alternatively, as shown by reference number 155b, the remote scanning system may redirect packets, encoding the software package, from the package repository to the developer system. For example, the remote scanning system may redirect the packets in implementations where the software package is not cached at the remote scanning system.

By using techniques as described in connection with Figs. 1A-1D, the software package is automatically blocked. As a result, chances of the software application (that would have been developed using the software package) having a security vulnerability are decreased, which improves security. Additionally, chances of the software application having bugs are decreased, which conserves computing resources that otherwise would have been spent on debugging and fixing the software application.

As indicated above, Figs. 1A-1D are provided as an example. Other examples may differ from what is described with regard to Figs. 1A-1D.

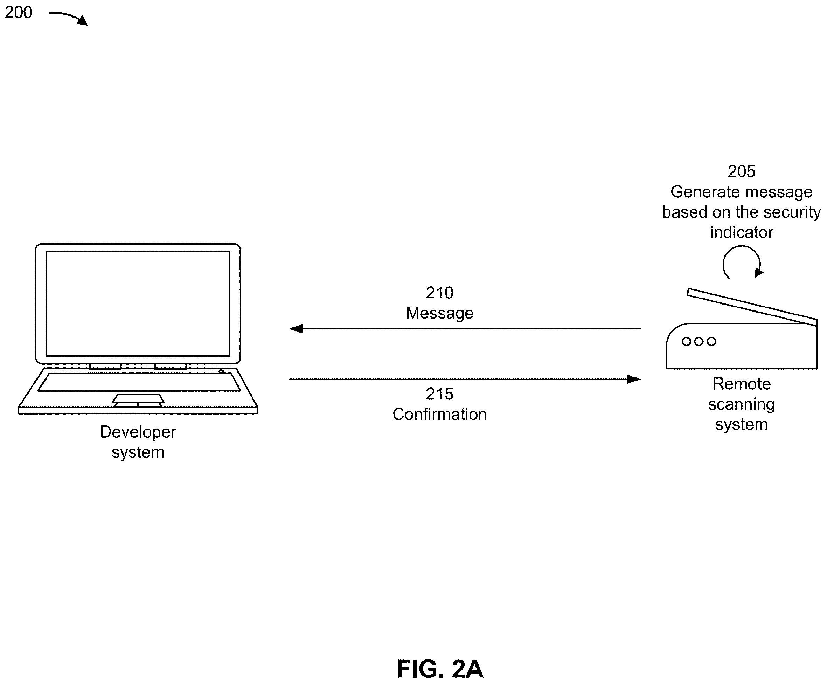

Figs. 2A-2B are diagrams of an example 200 associated with messages regarding unsecure software packages. As shown in Figs. 2A-2B, example 200 includes a developer system, a remote scanning system, and a package repository. These devices are described in more detail in connection with Figs. 4 and 5.

The example 200 is similar to the example 100, but the remote scanning system provides a message about a software package rather than blocking the software package. Therefore, the developer system may request the software package (e.g., as described in connection with Fig. 1A), and the remote scanning system may use an ML model to assess the software package (e.g., as described in connection with Fig. 1B). In Fig. 2A, the remote scanning system may have received a security indicator from the ML model and, optionally, may have mapped the security indicator to a severity level.

As shown in Fig. 2A and by reference number 205, the remote scanning system may generate a message based on the security indicator and/or the severity level. The message may encode the security indicator and/or the severity level. Additionally, or alternatively, the message may include a name of a security vulnerability determined using the security indicator. For example, the remote scanning system may use a table, a formula, or another type of data structure that stores security vulnerability names in association with possible security indicators. In another example, the name of the security vulnerability may be included in a data structure that also encodes the security indicator (e.g., the ML model may determine the name of the security vulnerability as well as other information included in the security indicator).

In some implementations, the message may further include a suggestion for implementing the software package (e.g., a suggestion on how to resolve security issues detected by the ML model). For example, the remote scanning system may use a table, a formula, or another type of data structure that stores suggestions in association with possible security indicators. In another example, the suggestion may be received from the ML model (e.g., with the security indicator).

As shown by reference number 210, the remote scanning system may transmit, and the developer system may receive, the message. The message may be an email message, a text message, a push notification, and/or instructions for a UI, among other examples. The developer system may output (e.g., using an output component of the developer system) the message to the user.

In some implementations, the user may have to confirm that the software package is still requested in view of (information in) the message. Accordingly, as shown by reference number 215, the developer system may transmit, and the remote scanning system may receive, an override command. The developer system may transmit, and the remote scanning system may receive, a confirmation that the software package is requested. The confirmation may be based on an interaction with the message. For example, the user of the developer system may interact with the message to trigger the developer system to transmit the confirmation.

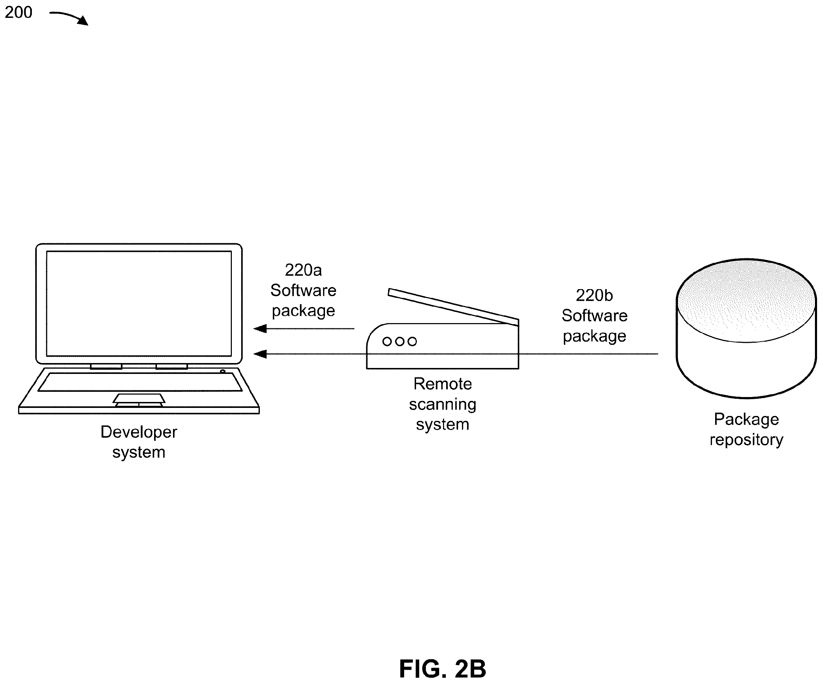

In response to the confirmation, the remote scanning system may forward the software package to the developer system (from the package repository). In some implementations, as shown in Fig. 2B and by reference number 220a, the remote scanning system may transmit the software package from a cache (e.g., as described in connection with Fig. 1A) to the developer system. Alternatively, as shown by reference number 220b, the remote scanning system may redirect packets, encoding the software package, from the package repository to the developer system. For example, the remote scanning system may redirect the packets in implementations where the software package is not cached at the remote scanning system.

By using techniques as described in connection with Figs. 2A-2B, the user is alerted to possible problems with the software package. As a result, security vulnerabilities and/or bugs in the software package are more likely to be fixed by the user, which improves security and/or conserves computing resources that otherwise would have been spent on debugging and fixing the software application, respectively.

As indicated above, Figs. 2A-2B are provided as an example. Other examples may differ from what is described with regard to Figs. 2A-2B.

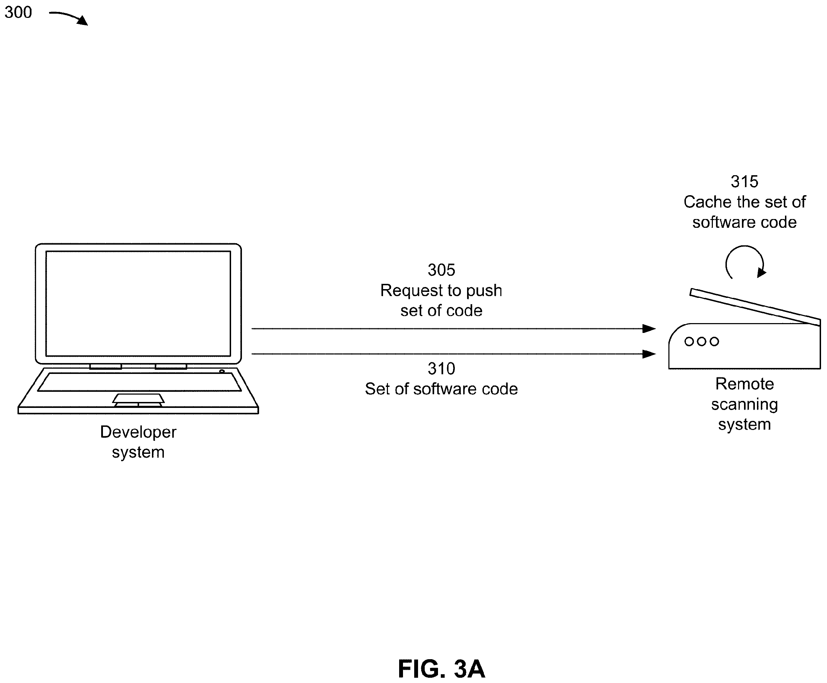

Figs. 3A-3D are diagrams of an example 300 associated with preemptive scans of software packages. As shown in Figs. 3A-3D, example 300 includes a developer system, a remote scanning system, a code repository, an ML model (e.g., provided by an ML host), and a production environment. These devices are described in more detail in connection with Figs. 4 and 5.

The example 300 is similar to the example 100, but the remote scanning system scans a set of software code rather than a software package. As shown in Fig. 3A and by reference number 305, the developer system may transmit, and the package repository may receive, a request to push a set of software code to the code repository or the production environment. The request may include an HTTP request, an FTP request, and/or an API call. In some implementations, the request may include (e.g., in a header and/or as an argument) an indication (e.g., a project name, a filepath, an index, and/or another type of alphanumeric identifier) of the set of software code (e.g., when requesting the set of software code be pushed to the production environment). Alternatively, as shown by reference number 310, the developer system may additionally transmit, and the package repository may additionally receive, the set of software code (e.g., when requesting the set of software code be pushed to the code repository). The set of software code may be included in a same message as the request or in a separate message. The remote scanning system may cache the set of software code, as shown by reference number 315. For example, the remote scanning system may store the set of software code in a cache controlled by the remote scanning system (whether local to the remote scanning system or remote therefrom).

In one example, a user of the developer system may provide input (e.g., via an input component of the developer system) that triggers the developer system to transmit the request (and optionally the set of software code). In some implementations, the user may interact with a UI in order to provide the input. For example, a web browser (or another type of application) executed by the developer system may navigate to a website controlled by (or at least associated with) the code repository; therefore, the developer system may output (e.g., via an output component of the developer system) the UI in order to represent the website. Alternatively, the user may provide text input (e.g., via a command line or a shell, among other examples) that triggers the developer system to transmit the request (and optionally the set of software code).

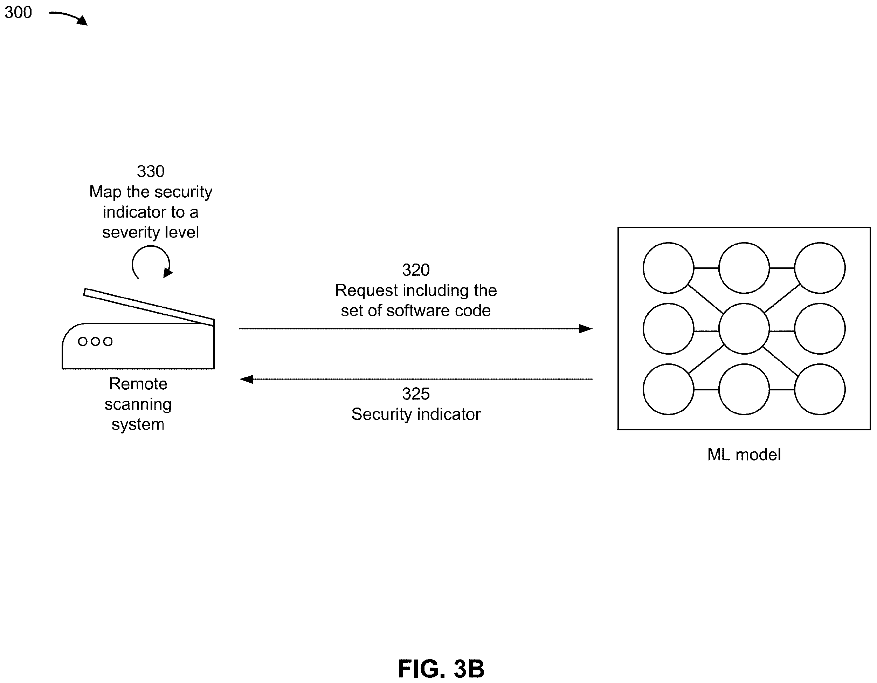

Although Fig. 3A depicts the remote scanning system caching the set of software code (prior to scanning the set of software code, as described in connection with Fig. 3B), other examples may include the remote scanning system not storing the set of software code. For example, the remote scanning system may be at least partially integrated (e.g., physically, virtually, and/or logically) with the code repository, such that the remote scanning system may access the set of software code directly (e.g., when already stored on the code repository and requested to be pushed to the production environment) without caching the set of software code.

As shown in Fig. 3B, the remote scanning system may preemptively scan the set of software code. In some implementations, the remote scanning system may provide (at least a portion of) the set of software code to the ML model in order to scan the set of software code. For example, as shown by reference number 320, the remote scanning system may transmit a request including the software package to the ML model (e.g., to the ML host providing the ML model). The request may include an HTTP request, an FTP request, and/or an API call. The ML model may be as described in connection with Fig. 1B.

In some implementations, the ML model is trained using at least one custom requirement associated with the developer system. For example, different customers may have different requirements for software, and therefore the ML model may be customized to a particular customer. Therefore, the ML model may be trained to identify security risks based on a custom list of security requirements and not merely a generic list of good security practices. As a result, the ML model may be more accurate as compared with, for example, a generic antivirus scanner.

In some implementations, the remote scanning system may provide the portion of the set of software code to the ML model without storing the set of software code at the code repository (e.g., when the developer system requests to push the set of software code to the code repository). As a result, memory is conserved at the code repository.

As shown by reference number 325, the ML model may output a security indicator associated with the set of software code. For example, the ML model may transmit (e.g., from the ML host providing the ML model), and the remote scanning system may receive, the security indicator associated with the set of software code. The security indicator may be quantitative (e.g., a score indicating how secure, or unsecure, the set of software code is) and/or qualitative (e.g., a category of security risk and/or a list of security vulnerabilities predicted to be caused by the set of software code, among other examples).

Although the example 300 is described in connection with the ML host (and thus the ML model) being separate from the remote scanning system, other examples may include the ML host (and thus the ML model) as at least partially integrated (e.g., physically, logically, and/or virtually) with the remote scanning system. Therefore, the remote scanning system may apply the ML model directly to the set of software code rather than transmitting the set of software code to the ML host (e.g., when the developer system requests to push the set of software code to the production environment).

As shown by reference number 330, the remote scanning system may map the security indicator to a severity level. For example, the remote scanning system may use a table, a formula, or another type of data structure that stores possible security indicators in association with possible severity levels. In another example, the security indicator may be included in a data structure that also encodes the severity level (e.g., the ML model may determine the severity level as well as other information included in the security indicator). The severity level may be qualitative (e.g., a score indicating how secure, or unsecure, the set of software code is) and/or qualitative (e.g., a letter grade representing how secure, or unsecure, the set of software code is).

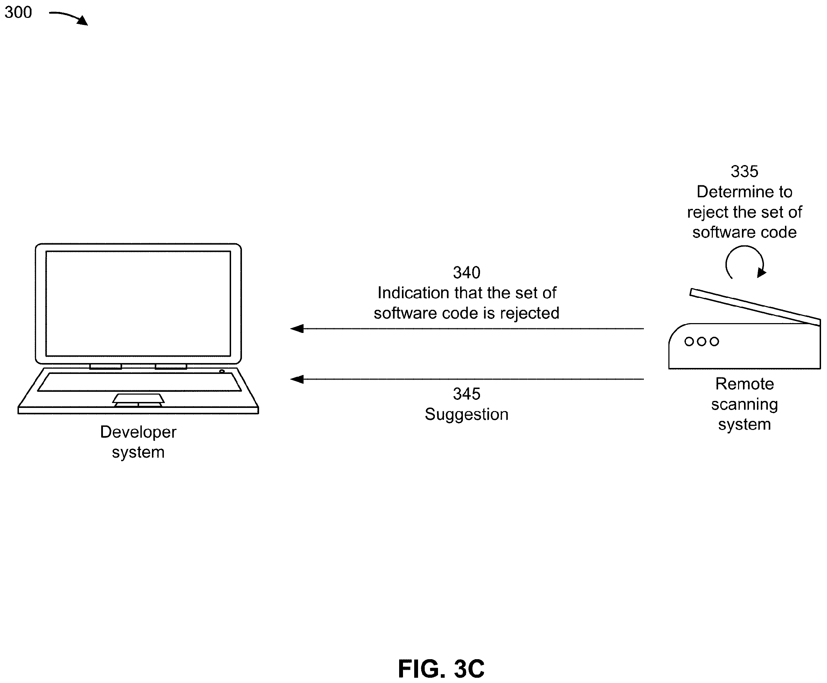

As shown in Fig. 3C and by reference number 335, the remote scanning system may determine to block the set of software code. For example, the remote scanning system may determine to block the set of software code based on the security indicator and/or the severity level. In one example, the remote scanning system may determine to block the set of software code based on the security indicator satisfying a condition (e.g., including a particular security vulnerability in a list) or a threshold (e.g., a score in the security indicator satisfying the threshold). Additionally, or alternatively, the remote scanning system may determine to block the set of software code based on the severity level satisfying the threshold.

As shown by reference number 340, the remote scanning system may transmit, and the developer system may receive, an indication that the set of software code is blocked. For example, the remote scanning system may transmit, and the developer system may receive, an indication of whether the set of software code is unsafe. The indication may be associated with the security indicator and/or the severity level (e.g., transmitted based on the security indicator and/or the severity level). In some implementations, the indication may further include a name of a security vulnerability determined using the security indicator. For example, the remote scanning system may use a table, a formula, or another type of data structure that stores security vulnerability names in association with possible security indicators. In another example, the name of the security vulnerability may be included in a data structure that also encodes the security indicator (e.g., the ML model may determine the name of the security vulnerability as well as other information included in the security indicator).

By automatically blocking the set of software code, the remote scanning system may improve security of a software application (that would have been compiled from the set of software code). Additionally, the remote scanning system may reduce bugs in the software application, which conserves computing resources that otherwise would have been spent on compiling and deploying a patch for the software application.

The indication may be included in an email message, a text message, a push notification, and/or instructions for a UI, among other examples. The developer system may output (e.g., using an output component of the developer system) the indication to the user. In some implementations, the remote scanning system may further transmit, and the developer system may further receive, a suggestion to correct the set of software code (e.g., a suggestion on how to resolve security issues detected by the ML model), as shown by reference number 345. For example, the remote scanning system may use a table, a formula, or another type of data structure that stores suggestions in association with possible security indicators. In another example, the suggestion may be received from the ML model (e.g., with the security indicator). The suggestion may be included in a same message as the indication or in a separate message.

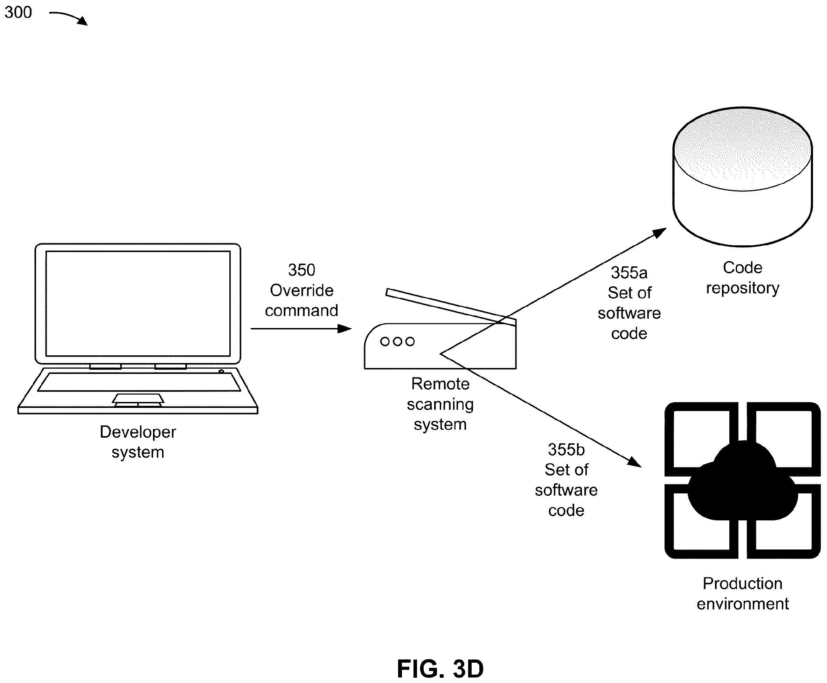

In some implementations, the user may be allowed to override the remote scanning system. Accordingly, as shown in Fig. 3D and by reference number 350, the developer system may transmit, and the remote scanning system may receive, an override command. The developer system may transmit, and the remote scanning system may receive, the override command in response to the indication. The override command may be based on an interaction with the indication. For example, the user of the developer system may interact with the indication to trigger the developer system to transmit the override command.

In response to the override command, the remote scanning system may push the set of software code to the code repository or the production environment. In some implementations, as shown by reference number 355a, the remote scanning system may push the set of software code from the cache (e.g., as described in connection with Fig. 3A) or from the developer system (e.g., by redirecting packets) to the code repository. Alternatively, as shown by reference number 355b, the remote scanning system may push the set of software code from the cache (e.g., as described in connection with Fig. 3A) or from the code repository (e.g., by redirecting packets) to the production environment.

By using techniques as described in connection with Figs. 3A-3D, the set of software code is automatically blocked. As a result, chances of the software application (that would have been compiled from the set of software code) having a security vulnerability are decreased, which improves security. Additionally, chances of the software application having bugs are decreased, which conserves computing resources that otherwise would have been spent on debugging and fixing the software application.

As indicated above, Figs. 3A-3D are provided as an example. Other examples may differ from what is described with regard to Figs. 3A-3D.

Fig. 4 is a diagram of an example environment 400 in which systems and/or methods described herein may be implemented. As shown in Fig. 4, environment 400 may include a remote scanning system 401, which may include one or more elements of and/or may execute within a cloud computing system 402. The cloud computing system 402 may include one or more elements 403-412, as described in more detail below. As further shown in Fig. 4, environment 400 may include a network 420, a developer system 430, a package repository 440, a code repository 450, a production environment 460, and/or an ML host 470. Devices and/or elements of environment 400 may interconnect via wired connections and/or wireless connections.

The cloud computing system 402 may include computing hardware 403, a resource management component 404, a host operating system (OS) 405, and/or one or more virtual computing systems 406. The cloud computing system 402 may execute on, for example, an Amazon Web Services platform, a Microsoft Azure platform, or a Snowflake platform. The resource management component 404 may perform virtualization (e.g., abstraction) of computing hardware 403 to create the one or more virtual computing systems 406. Using virtualization, the resource management component 404 enables a single computing device (e.g., a computer or a server) to operate like multiple computing devices, such as by creating multiple isolated virtual computing systems 406 from computing hardware 403 of the single computing device. In this way, computing hardware 403 can operate more efficiently, with lower power consumption, higher reliability, higher availability, higher utilization, greater flexibility, and lower cost than using separate computing devices.

The computing hardware 403 may include hardware and corresponding resources from one or more computing devices. For example, computing hardware 403 may include hardware from a single computing device (e.g., a single server) or from multiple computing devices (e.g., multiple servers), such as multiple computing devices in one or more data centers. As shown, computing hardware 403 may include one or more processors 407, one or more memories 408, and/or one or more networking components 409. Examples of a processor, a memory, and a networking component (e.g., a communication component) are described elsewhere herein.

The resource management component 404 may include a virtualization application (e.g., executing on hardware, such as computing hardware 403) capable of virtualizing computing hardware 403 to start, stop, and/or manage one or more virtual computing systems 406. For example, the resource management component 404 may include a hypervisor (e.g., a bare-metal or Type 1 hypervisor, a hosted or Type 2 hypervisor, or another type of hypervisor) or a virtual machine monitor, such as when the virtual computing systems 406 are virtual machines 410. Additionally, or alternatively, the resource management component 404 may include a container manager, such as when the virtual computing systems 406 are containers 411. In some implementations, the resource management component 404 executes within and/or in coordination with a host operating system 405.

A virtual computing system 406 may include a virtual environment that enables cloud-based execution of operations and/or processes described herein using computing hardware 403. As shown, a virtual computing system 406 may include a virtual machine 410, a container 411, or a hybrid environment 412 that includes a virtual machine and a container, among other examples. A virtual computing system 406 may execute one or more applications using a file system that includes binary files, software libraries, and/or other resources required to execute applications on a guest operating system (e.g., within the virtual computing system 406) or the host operating system 405.

Although the remote scanning system 401 may include one or more elements 403-412 of the cloud computing system 402, may execute within the cloud computing system 402, and/or may be hosted within the cloud computing system 402, in some implementations, the remote scanning system 401 may not be cloud-based (e.g., may be implemented outside of a cloud computing system) or may be partially cloud-based. For example, the remote scanning system 401 may include one or more devices that are not part of the cloud computing system 402, such as device 500 of Fig. 5, which may include a standalone server or another type of computing device. The remote scanning system 401 may perform one or more operations and/or processes described in more detail elsewhere herein.

The network 420 may include one or more wired and/or wireless networks. For example, the network 420 may include a cellular network, a public land mobile network (PLMN), a local area network (LAN), a wide area network (WAN), a private network, the Internet, and/or a combination of these or other types of networks. The network 420 enables communication among the devices of the environment 400.

The developer system 430 may include one or more devices capable of receiving, generating, storing, processing, and/or providing information associated with software packages and/or software code, as described elsewhere herein. The developer system 430 may include a communication device and/or a computing device. For example, the developer system 430 may include a wireless communication device, a mobile phone, a user equipment, a laptop computer, a tablet computer, a desktop computer, a gaming console, a set-top box, a wearable communication device (e.g., a smart wristwatch, a pair of smart eyeglasses, a head mounted display, or a virtual reality headset), or a similar type of device. The developer system 430 may communicate with one or more other devices of environment 400, as described elsewhere herein.

The package repository 440 may include one or more devices capable of receiving, generating, storing, processing, and/or providing information associated with code branches, as described elsewhere herein. For example, the package repository 440 may include a remote storage system, similar to Google^{®} Drive or Dropbox^{®}, among other examples. The package repository 440 may include a communication device and/or a computing device. For example, the package repository 440 may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. The package repository 440 may communicate with one or more other devices of environment 400, as described elsewhere herein.

The code repository 450 may include one or more devices capable of receiving, generating, storing, processing, and/or providing information associated with software code, as described elsewhere herein. For example, the code repository 450 may include Github^{®} or SourceForge^{®}, among other examples. The code repository 450 may include a communication device and/or a computing device. For example, the code repository 450 may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. The code repository 450 may communicate with one or more other devices of environment 400, as described elsewhere herein.

The production environment 460 may include one or more devices capable of receiving, generating, storing, processing, and/or providing information associated with software code, as described elsewhere herein. For example, the production environment 460 may include Github or Jenkins^{®}, among other examples. The production environment 460 may include a communication device and/or a computing device. For example, the production environment 460 may include a server, such as an application server, a client server, a web server, a database server, a host server, a proxy server, a virtual server (e.g., executing on computing hardware), or a server in a cloud computing system. In some implementations, the production environment 460 may include computing hardware used in a cloud computing environment. The production environment 460 may communicate with one or more other devices of environment 400, as described elsewhere herein.

The ML host 470 may include one or more devices capable of receiving, generating, storing, processing, providing, and/or routing information associated with machine learning models, as described elsewhere herein. The ML host 470 may include a communication device and/or a computing device. For example, the ML host 470 may include a server, such as an application server, a client server, a web server, a database server, a host server, a proxy server, a virtual server (e.g., executing on computing hardware), or a server in a cloud computing system. In some implementations, the ML host 470 may include computing hardware used in a cloud computing environment. The ML host 470 may communicate with one or more other devices of environment 400, as described elsewhere herein.

The number and arrangement of devices and networks shown in Fig. 4 are provided as an example. In practice, there may be additional devices and/or networks, fewer devices and/or networks, different devices and/or networks, or differently arranged devices and/or networks than those shown in Fig. 4. Furthermore, two or more devices shown in Fig. 4 may be implemented within a single device, or a single device shown in Fig. 4 may be implemented as multiple, distributed devices. Additionally, or alternatively, a set of devices (e.g., one or more devices) of the environment 400 may perform one or more functions described as being performed by another set of devices of the environment 400.

Fig. 5 is a diagram of example components of a device 500 associated with preemptive security scans of software packages. The device 500 may correspond to a developer system 430, a package repository 440, a code repository 450, a production environment 460, and/or an ML host 470. In some implementations, a developer system 430, a package repository 440, a code repository 450, a production environment 460, and/or an ML host 470 may include one or more devices 500 and/or one or more components of the device 500. As shown in Fig. 5, the device 500 may include a bus 510, a processor 520, a memory 530, an input component 540, an output component 550, and/or a communication component 560.

The bus 510 may include one or more components that enable wired and/or wireless communication among the components of the device 500. The bus 510 may couple together two or more components of Fig. 5, such as via operative coupling, communicative coupling, electronic coupling, and/or electric coupling. For example, the bus 510 may include an electrical connection (e.g., a wire, a trace, and/or a lead) and/or a wireless bus. The processor 520 may include a central processing unit, a graphics processing unit, a microprocessor, a controller, a microcontroller, a digital signal processor, a field-programmable gate array, an application-specific integrated circuit, and/or another type of processing component. The processor 520 may be implemented in hardware, firmware, or a combination of hardware and software. In some implementations, the processor 520 may include one or more processors capable of being programmed to perform one or more operations or processes described elsewhere herein.

The memory 530 may include volatile and/or nonvolatile memory. For example, the memory 530 may include random access memory (RAM), read only memory (ROM), a hard disk drive, and/or another type of memory (e.g., a flash memory, a magnetic memory, and/or an optical memory). The memory 530 may include internal memory (e.g., RAM, ROM, or a hard disk drive) and/or removable memory (e.g., removable via a universal serial bus connection). The memory 530 may be a non-transitory computer-readable medium. The memory 530 may store information, one or more instructions, and/or software (e.g., one or more software applications) related to the operation of the device 500. In some implementations, the memory 530 may include one or more memories that are coupled (e.g., communicatively coupled) to one or more processors (e.g., processor 520), such as via the bus 510. Communicative coupling between a processor 520 and a memory 530 may enable the processor 520 to read and/or process information stored in the memory 530 and/or to store information in the memory 530.

The input component 540 may enable the device 500 to receive input, such as user input and/or sensed input. For example, the input component 540 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 550 may enable the device 500 to provide output, such as via a display, a speaker, and/or a light-emitting diode. The communication component 560 may enable the device 500 to communicate with other devices via a wired connection and/or a wireless connection. For example, the communication component 560 may include a receiver, a transmitter, a transceiver, a modem, a network interface card, and/or an antenna.

The device 500 may perform one or more operations or processes described herein. For example, a non-transitory computer-readable medium (e.g., memory 530) may store a set of instructions (e.g., one or more instructions or code) for execution by the processor 520. The processor 520 may execute the set of instructions to perform one or more operations or processes described herein. In some implementations, execution of the set of instructions, by one or more processors 520, causes the one or more processors 520 and/or the device 500 to perform one or more operations or processes described herein. In some implementations, hardwired circuitry may be used instead of or in combination with the instructions to perform one or more operations or processes described herein. Additionally, or alternatively, the processor 520 may be configured to perform one or more operations or processes described herein. Thus, implementations described herein are not limited to any specific combination of hardware circuitry and software.

The number and arrangement of components shown in Fig. 5 are provided as an example. The device 500 may include additional components, fewer components, different components, or differently arranged components than those shown in Fig. 5. Additionally, or alternatively, a set of components (e.g., one or more components) of the device 500 may perform one or more functions described as being performed by another set of components of the device 500.

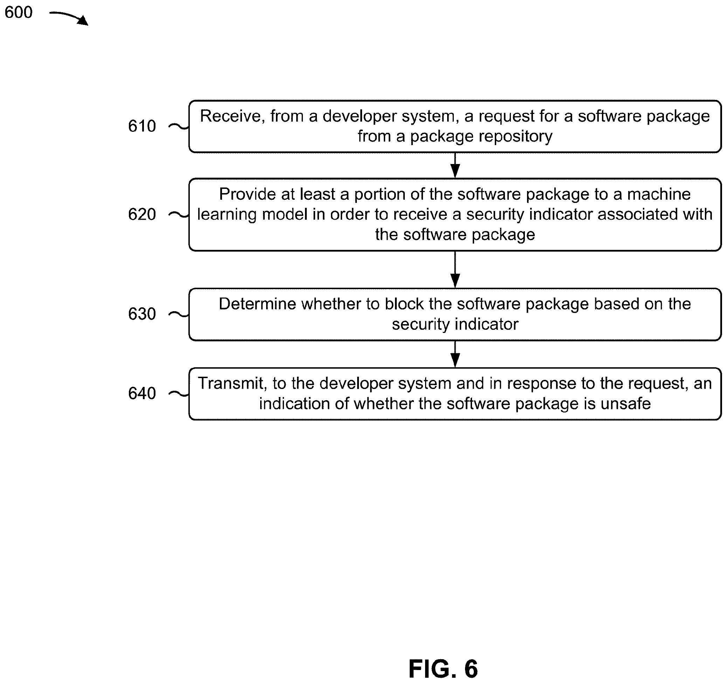

Fig. 6 is a flowchart of an example process 600 associated with preemptive security scans of software packages. In some implementations, one or more process blocks of Fig. 6 may be performed by a remote scanning system 401. In some implementations, one or more process blocks of Fig. 6 may be performed by another device or a group of devices separate from or including the remote scanning system 401, such as a developer system 430, a package repository 440, a code repository 450, a production environment 460, and/or an ML host 470. Additionally, or alternatively, one or more process blocks of Fig. 6 may be performed by one or more components of the device 500, such as processor 520, memory 530, input component 540, output component 550, and/or communication component 560.

As shown in Fig. 6, process 600 may include receiving, from a developer system, a request for a software package from a package repository (block 610). For example, the remote scanning system 401 (e.g., using processor 520, memory 530, and/or communication component 560) may receive, from a developer system, a request for a software package from a package repository, as described above in connection with reference number 105 of Fig. 1A. As an example, the request may include an HTTP request, an FTP request, and/or an API call. The request may include (e.g., in a header and/or as an argument) an indication of the software package.

As further shown in Fig. 6, process 600 may include providing at least a portion of the software package to a machine learning model in order to receive a security indicator associated with the software package (block 620). For example, the remote scanning system 401 (e.g., using processor 520, memory 530, and/or communication component 560) may provide at least a portion of the software package to a machine learning model in order to receive a security indicator associated with the software package, as described above in connection with Fig. 1B. As an example, the machine learning model may output the security indicator, which may be quantitative (e.g., a score indicating how secure, or unsecure, the software package is) and/or qualitative (e.g., a category of security risk and/or a list of security vulnerabilities predicted to be caused by the software package, among other examples). In some implementations, the machine learning model is trained using at least one custom requirement associated with the developer system.

As further shown in Fig. 6, process 600 may include determining whether to block the software package based on the security indicator (block 630). For example, the remote scanning system 401 (e.g., using processor 520 and/or memory 530) may determine whether to block the software package based on the security indicator, as described above in connection with reference number 140 of Fig. 1C. As an example, the remote scanning system 401 may determine to block the software package based on the security indicator satisfying a condition (e.g., including a particular security vulnerability in a list) or a threshold (e.g., a score in the security indicator satisfying the threshold). Additionally, or alternatively, the remote scanning system 401 may determine to block the software package based on the severity level satisfying the threshold.

As further shown in Fig. 6, process 600 may include transmitting, to the developer system and in response to the request, an indication of whether the software package is unsafe (block 640). For example, the remote scanning system 401 (e.g., using processor 520, memory 530, and/or communication component 560) may transmit, to the developer system and in response to the request, an indication of whether the software package is unsafe, as described above in connection with reference number 145 of Fig. 1C. As an example, the indication may be associated with the security indicator and/or the severity level (e.g., transmitted based on the security indicator and/or the severity level). In some implementations, the indication may further include a name of a security vulnerability determined using the security indicator.

Although Fig. 6 shows example blocks of process 600, in some implementations, process 600 may include additional blocks, fewer blocks, different blocks, or differently arranged blocks than those depicted in Fig. 6. Additionally, or alternatively, two or more of the blocks of process 600 may be performed in parallel. The process 600 is an example of one process that may be performed by one or more devices described herein. These one or more devices may perform one or more other processes based on operations described herein, such as the operations described in connection with Figs. 1A-1D, Figs. 2A-2B, and/or Figs. 3A-3D. Moreover, while the process 600 has been described in relation to the devices and components of the preceding figures, the process 600 can be performed using alternative, additional, or fewer devices and/or components. Thus, the process 600 is not limited to being performed with the example devices, components, hardware, and software explicitly enumerated in the preceding figures.

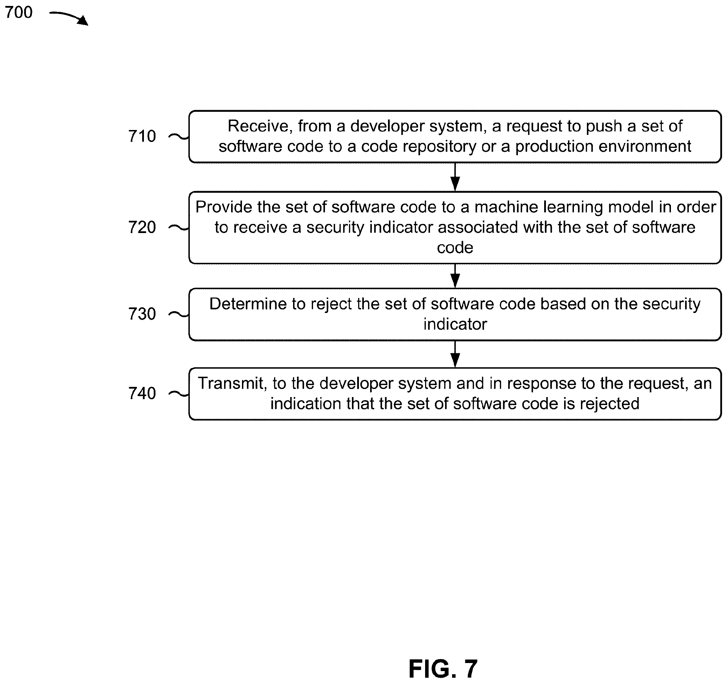

Fig. 7 is a flowchart of an example process 700 associated with preemptive security scans of software code. In some implementations, one or more process blocks of Fig. 7 may be performed by a remote scanning system 401. In some implementations, one or more process blocks of Fig. 7 may be performed by another device or a group of devices separate from or including the remote scanning system 401, such as a developer system 430, a package repository 440, a code repository 450, a production environment 460, and/or an ML host 470. Additionally, or alternatively, one or more process blocks of Fig. 7 may be performed by one or more components of the device 500, such as processor 520, memory 530, input component 540, output component 550, and/or communication component 560.

As shown in Fig. 7, process 700 may include receiving, from a developer system, a request to push a set of software code to a code repository or a production environment (block 710). For example, the remote scanning system 401 (e.g., using processor 520, memory 530, and/or communication component 560) may receive, from a developer system, a request to push the set of software code to a code repository or a production environment, as described above in connection with reference number 305 of Fig. 3A. As an example, the request may include an HTTP request, an FTP request, and/or an API call. In one example, the request may include (e.g., in a header and/or as an argument) an indication of the set of software code. In another example, the remote scanning system 401 may additionally receive the set of software code from the developer system.

As further shown in Fig. 7, process 700 may include providing the set of software code to a machine learning model in order to receive a security indicator associated with the set of software code (block 720). For example, the remote scanning system 401 (e.g., using processor 520, memory 530, and/or communication component 560) may provide the set of software code to a machine learning model in order to receive a security indicator associated with the set of software code, as described above in connection with Fig. 3B. As an example, the machine learning model may output the security indicator, which may be quantitative (e.g., a score indicating how secure, or unsecure, the set of software code is) and/or qualitative (e.g., a category of security risk and/or a list of security vulnerabilities predicted to be caused by the set of software code, among other examples). In some implementations, the machine learning model is trained using at least one custom requirement associated with the developer system.

As further shown in Fig. 7, process 700 may include determining to reject the set of software code based on the security indicator (block 730). For example, the remote scanning system 401 (e.g., using processor 520 and/or memory 530) may determine to reject the set of software code based on the security indicator, as described above in connection with reference number 335 of Fig. 3C. As an example, the remote scanning system 401 may determine to block the set of software code based on the security indicator satisfying a condition (e.g., including a particular security vulnerability in a list) or a threshold (e.g., a score in the security indicator satisfying the threshold). Additionally, or alternatively, the remote scanning system 401 may determine to block the set of software code based on the severity level satisfying the threshold.

As further shown in Fig. 7, process 700 may include transmitting, to the developer system and in response to the request, an indication that the set of software code is rejected (block 740). For example, the remote scanning system 401 (e.g., using processor 520, memory 530, and/or communication component 560) may transmit, to the developer system and in response to the request, an indication that the set of software code is rejected, as described above in connection with reference number 340 of Fig. 3C. As an example, the indication may be associated with the security indicator and/or the severity level (e.g., transmitted based on the security indicator and/or the severity level). In some implementations, the indication may further include a name of a security vulnerability determined using the security indicator.

Although Fig. 7 shows example blocks of process 700, in some implementations, process 700 may include additional blocks, fewer blocks, different blocks, or differently arranged blocks than those depicted in Fig. 7. Additionally, or alternatively, two or more of the blocks of process 700 may be performed in parallel. The process 700 is an example of one process that may be performed by one or more devices described herein. These one or more devices may perform one or more other processes based on operations described herein, such as the operations described in connection with Figs. 1A-1D, Figs. 2A-2B, and/or Figs. 3A-3D. Moreover, while the process 700 has been described in relation to the devices and components of the preceding figures, the process 700 can be performed using alternative, additional, or fewer devices and/or components. Thus, the process 700 is not limited to being performed with the example devices, components, hardware, and software explicitly enumerated in the preceding figures.

The foregoing disclosure provides illustration and description, but is not intended to be exhaustive or to limit the implementations to the precise forms disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The hardware and/or software code described herein for implementing aspects of the disclosure should not be construed as limiting the scope of the disclosure. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination and permutation of those items, including single members. As an example, "at least one of: a, b, or c" is intended to cover a, b, c, a-b, a-c, b-c, and a-b-c, as well as any combination with multiple of the same item. As used herein, the term "and/or" used to connect items in a list refers to any combination and any permutation of those items, including single members (e.g., an individual item in the list). As an example, "a, b, and/or c" is intended to cover a, b, c, a-b, a-c, b-c, and a-b-c.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A system for preemptively scanning a software package, the system comprising:
one or more memories; and
one or more processors, communicatively coupled to the one or more memories, configured to:
receive, from a developer system, a request for the software package from a package repository;
provide at least a portion of the software package to a machine learning model in order to receive a security indicator associated with the software package, wherein the machine learning model is trained using at least one custom requirement associated with the developer system;
determine whether to block the software package based on the security indicator; and
transmit, to the developer system and in response to the request, an indication of whether the software package is unsafe.

2. The system of claim 1, wherein the portion of the software package is provided to the machine learning model without storing the software package at the developer system.

3. The system of claim 1 or 2, wherein the one or more processors, to determine to block the software package, are configured to:
map the security indicator to a severity level,
wherein the severity level is associated with the indication of whether the software package is unsafe.

4. The system of any one of claims 1 to 3, wherein the one or more processors are configured to:
receive, from the developer system and in response to the indication, an override command; and
forward the software package from the package repository and to the developer system in response to the override command.

5. The system of any one of claim 1 to 4, wherein the one or more processors, to provide at least a portion of the software package to the machine learning model, are configured to:
transmit, to a machine learning host associated with the machine learning model, a request including the portion of the software package,
wherein the security indicator is received from the machine learning host in response to the request.

6. The system of any one of claims 1 to 5, wherein the indication further includes a name of a security vulnerability determined using the security indicator.

7. A method of preemptively scanning a software package, comprising:
receiving, from a developer system and at a remote scanning system, a request for the software package from a package repository;
providing at least a portion of the software package to a machine learning model in order to receive a security indicator associated with the software package;
generating, by the remote scanning system, a message based on the security indicator;
transmitting, to the developer system and in response to the request, the message;
receiving, from the developer system and at the remote scanning system, a confirmation that the software package is requested; and
forwarding, by the remote scanning system, the software package from the package repository and to the developer system.

8. The method of claim 7, wherein:
(a) the request comprises a request to download the software package; and/or
(b) the confirmation comprises an indication of an interaction with the message.

9. The method of claim 7 or 8, wherein the remote scanning system functions as a proxy for the package repository, and the request is received by the remote scanning system on behalf of the package repository.

10. The method of any one of claims 7 to 9, wherein:
(a) the message comprises an email message, a text message, a push notification, or instructions for a user interface; and/or
(b) the message further includes a suggestion for implementing the software package, and the suggestion is received from the machine learning model.

11. The method of any one of claims 7 to 10, wherein forwarding the software package comprises:
(a) storing the software package in a cache controlled by the remote scanning system; and transmitting the software package from the cache to the developer system; or
(b) redirecting packets, encoding the software package, from the package repository to the developer system.

12. A non-transitory computer-readable medium storing a set of instructions for preemptively scanning a set of software code, the set of instructions comprising:
one or more instructions that, when executed by one or more processors of a device, cause the device to:
receive, from a developer system, a request to push the set of software code to a code repository or a production environment;
provide the set of software code to a machine learning model in order to receive a security indicator associated with the set of software code, wherein the machine learning model is trained using at least one custom requirement associated with the developer system;
determine to reject the set of software code based on the security indicator; and
transmit, to the developer system and in response to the request, an indication that the set of software code is rejected.

13. The non-transitory computer-readable medium of claim 12, wherein:
(a) the indication further includes a suggestion to correct the set of software code, and the suggestion is received from the machine learning model; and/or
(b) the indication comprises an email message, a text message, a push notification, or instructions for a user interface.

14. The non-transitory computer-readable medium of claim 12 or 13, wherein:
(a) the one or more instructions, that cause the device to determine to reject the set of software code, cause the device to: map the security indicator to a severity level, wherein the severity level is associated with an instruction to block the set of software code; and/or
(b) the one or more instructions, that cause the device to provide the set of software code to the machine learning model, cause the device to: transmit, to a machine learning host associated with the machine learning model, a request including the set of software code, wherein the security indicator is received from the machine learning host in response to the request.

15. The non-transitory computer-readable medium of any one of claims 12 to 14, wherein the one or more instructions, when executed by the one or more processors, cause the device to:
receive, from the developer system and in response to the indication, an override command; and
push the set of software code to the code repository or the production environment in response to the override command.
